# EUROPEAN PATENT SPECIFICATION

(11) **EP 1 899 128 B1**
(45) Date of publication and mention of the grant of the patent: **29.12.2010**
(21) Application number: 06721546.7
(22) Date of filing: 27.03.2006
(51) Int. Cl.: B29B 11/08, B29B 11/14, B29C 49/22, B29C 49/06

(54) **DEVICE AND PROCESS FOR MANUFACTURING A PREFORM, PREFORM FOR BLOW MOULDING A CONTAINER AND SUCH A CONTAINER**
VORRICHTUNG UND VERFAHREN ZUR HERSTELLUNG EINES VORFORMLINGS, VORFORMLING ZUM BLASFORMEN EINES BEHÄLTERS UND SOLCH EIN BEHÄLTER
APPAREIL ET PROCEDE DE FABRICATION D'UND PREFORME, PREFORME POUR MOULER UN RECIPIENT PAR SOUFFLAGE, ET UN TEL RECIPIENT

(30) Priority: 25.03.2005 BE 200500162
(43) Date of publication of application: 19.03.2008
(73) Proprietor: RESILUX, B-9230 Wetteren (BE)
(72) Inventor: DIERICKX, William, 9070 Destelbergen (BE)
(74) Representative: Petsis, Christos
(86) International application number: PCT/BE2006/000025
(87) International publication number: WO 2006/099700

(56) References cited:
- EP-A1- 0 374 247
- EP-A1- 1 449 646
- EP-A2- 0 904 922
- WO-A2-2006/012713
- US-A- 6 066 287
- US-A1- 2002 005 044
- BICHLER M ET AL: "MULTILAYER-PREFORMS" KUNSTSTOFFE, CARL HANSER VERLAG, MUNCHEN, DE, vol. 87, no. 10, October 1997 (1997-10), page 1290,1292,1294,, XP000723386 ISSN: 0023-5563

## Description

### Field of the invention

The present invention relates to a preform for producing containers comprising a neck section, an adjoining wall section and a bottom section forming the base of the preform. It is composed of a multilayer structure, one layer of which is directed inwardly and is made of a primary synthetic material forming a primary basis layer. A further layer extends at a certain distance of said primary layer which is directed outwardly with respect thereto, thereby forming the outer surface layer of the preform. It is made of a tertiary synthetic material forming a tertiary surface layer.

### Prior art

Containers are generally expected to ensure that the characteristics and properties of the products accommodated in them are kept as stable as possible in the course of time.

EP 0 380 215 discloses a preform whose core carries a barrier layer which is intended to prevent undesirable gas particles from traversing the wall of the preform. However, the latter consists of a material that is costly to make, and the cost can be prohibitive in some cases.

A barrier layer made of solid Nylon^{®} is also known, but a further problem here is that this material is quite hydrophilic, so that moisture can enter the preform through the barrier layer at the injection point of the preform. The disadvantage of such materials is that they have a pronounced tendency to absorb moisture, causing delamination when the preform is being converted into a container. The secondary core layer thus loses its barrier properties and in addition the container suffers undesirable discoloration.

Since the known secondary materials such as nylon are very hydrophilic, the problem with the known preforms of this type is that moisture seeps in through their base, exerting an undesirable effect on them.

Document US 2002/0005044 of MAHAJAN A discloses a preform and a blow molded container having plural cavities or compartments including vacuum containers or barrier materials. This preform, resp. container consists of inner and outer walls spaced along their length, which requires a multistep manufacturing of the preform, wherein the barrier is realized after formation of said inner and outer walls.

Document US 6 066 287 of BRADY A equally discloses a double walled container which is formed by gas assist injection molding, whereafter the container is further processed by inserting a gas between the container walls, i.e. its inner, resp. outer wall yet formed preliminarily, to be followed likewise by still further manufacturing steps, This equally results in the need of several additional manufacturing steps, thereby contributing to a needless complexification of the manufacturing process of the preform or container.

Document EP 037 4247 A of NISSEI discloses a multilayer co-injection nozzle for conventional three layer, two plastic material co-injection and the co-injection processing of PET multilayer barrier structures such as PET/EVOH/PET and PET/MXD PAIPET. This teaches that it is possible to process the barrier plastic materials at lower temperatures than PET, the melt temperature differential between the materials being as high as 40°C in the case of EVOH processing. This patent discusses the co-injection processing of solid plastic materials at different temperatures as done in co-extrusion.

Document EP 0 904 922 A2 of MITSUBISHI GAS CHEMICALS also discloses the co-injection processing of a PET multilayer barrier structure. It equally concerns multilayers of solid plastic materials, whereby the barrier material MXD PA or EVOH are processed at lower temperatures than PET. The temperature differentials are similar to those in the Nissei patent above.

### Aim of the invention

The aim of the present invention is to provide a preform of the above type, but one with an effective barrier layer for a wide range of applications on the one hand, and at an acceptable cost, on the other hand. It is therefore aimed at ensuring the best adhesion between the various layers. Some liquids are more compatible with the primary material, such as polyethylene terephthalate (PET), than with a number of currently employed secondary materials such as nylon, which are not compatible in this respect.

### Summary of the invention

For this purpose, there is proposed a preform according to the present invention as defined in the main claim, which is remarkable in that it comprises at least one further layer which is arranged as a secondary intermediate layer between said primary and tertiary layers which is composed of a material which is liquid during the production process and thereafter, and in that said secondary layer is a barrier layer. Each layer is substantially continuous and uninterrupted. A secondary material is thus incorporated in it as a liquid fluid, forming the barrier layer. This has the great advantage that it forms an efficient barrier along the entire length of the preform, including its neck region.

Secondary materials that have a lower viscosity under normal working conditions of temperature and pressure, referred to below as "cold liquids", are the best in this connection.

Such a secondary material can be applied more evenly. This has the considerable advantage that less secondary material is needed for the layer, so the cost is reduced. Furthermore, a better structure is obtained, resulting in a better barrier layer. This is directly due to the behaviour of liquids, which have a natural tendency to fill in a given volume evenly, causing considerably less delamination between the layers.

Thanks to the use of a liquid as the secondary barrier material, the barrier layer can be applied over the entire length of the preform, from its base right up to its neck next to the rim for pouring out the contents. As a result, virtually the same barrier effect can be achieved over the whole extent of the container made in this way, even in the neck region, which is not available in the prior art. The reason for this advantage is that liquid fluids ensure a perfectly uniform filling of the space between the primary and the tertiary layer, since liquids are intrinsicly uncompressible thereby promoting the uniformity.

This is a very important advantage, because the product accommodated in the container obtained from the preform can then perfectly retain its characteristics without suffering any degradation in the course of time, owing to undesirable interactions with the surroundings or even with the interior of the container.

Besides, thanks to the invention, less secondary material is needed in relative terms, which means that the same barrier properties are retained without the delamination problem mentioned above, since according to the invention, said intermediate secondary layer takes less than 5%, and especially less than 1%, of the overall weight of the preform, while ensuring the same barrier effect.

According to a preferred embodiment of the invention, the secondary layer has a very small thickness, preferably not more than 0,05 mm and especially even less than 0,01 mm.

According to another embodiment of the invention, the secondary material is an oil and more specifically an oil-based substance. Water is also an alternative, and more specifically a water-containing substance. This means liquids wherein water is bound. Particularly advantageous is in this connection the excellent lamination that can be obtained with these, because of fewer problems concerning compatibility between the various layers.

In a further advantageous embodiment of the invention, the said secondary material is an acrylate with a water and/or oil basis. This type of barrier to liquids is particularly suitable for biological applications. Acrylates are very good barriers to acids indeed. Oil-containing acrylates form ideal carriers for so-called active barriers.

Thanks to the lamination effect that occurs in liquids, a preform according to the invention offers particularly valuable properties. Thanks to the limited thickness of the secondary layer that can thus be made, it is now finally possible to use nanoscale composites for the secondary layer, especially those based on clay, wherein more specifically, the intrinsic properties of these composites can be fully utilized here, owing to lamination. This has actually become possible because the secondary layer can be applied more evenly. This material has a particular property of excellent covering ability, making a particularly extensive coverage possible.

In yet another embodiment of the invention, the secondary material is in the form of a coating, especially one made of polyurethane, which scores by having favourable properties at elevated temperatures.

In an especially preferred embodiment of the invention, the said secondary material is a liquid polymer, especially a polymer-bioaggregate (PBA), which materials are described in detail in Patent application BE 2004/0431. Yeast strains and yeast cells are resistant to temperatures of up to about 170°C if the corresponding exposure time is relatively short, namely of the order of 0,1 sec.

Further features thereof are specified in the various sub-claims.

In an additional embodiment of the invention, said preform is composed of five layers, with said secondary layer carrying an intermediate layer at least on its side that is in contact with the adjacent primary layer and the tertiary layer, wherein the quaternary layer also consists of a liquid.

It should be understood that said fluids are yet liquids; but they can also be intermediate phases such as pastes and other substances comprising a normal liquid phase, such as e.g. adhesives.

In an especially advantageous embodiment of the invention, the secondary, respectively quaternary layer(s) carry an adhesive layer that has been treated with yeast cells, so that a mechanical adhesion with the primary and tertiary layers is ensured.

In another advantageous embodiment of the preform according to the invention, at least the outward-facing tertiary layer carries a predetermined amount of additives that are incorporated in the plastic forming the tertiary layer. Thanks to the presence of additives, any substance that might migrate from outside the container into its inside becomes chemically bound and thus neutralized, so it cannot reach the product that is accommodated in the container.

Conversely, the additives present in the primary layer similarly ensure that substances that are detrimental to the product accommodated in the container are similarly bound, so that these internal constituents likewise cannot cause any degradation in the product inside the container.

In a specific embodiment of the preform according to the invention, the said primary layer contains additives that neutralize external radiation, particularly ultraviolet rays, so that a light barrier is formed therewith. This effect is advantageous in the case of products such as milk, because light causes the greatest degradation to milk and especially to the vitamins in it.

In yet another advantageous embodiment of the preform according to the invention, the primary layer contains additives that counteract undesirable gas formation, thereby providing a so-called barrier to gases. This is primarily intended against carbon dioxide or oxygen that is formed in the degradation of a p.roduct in the container and which is present in the latter together with the filling product, especially in the ullage space above the fitting level, where no filling product of the drink-type is present. This barrier to gases can prevent the oxidation of a drink packed in the container.

In yet a still further advantageous embodiment of the preform according to the invention, the inward-facing tertiary layer contains additives that neutralize the deleterious reagents that stems from the container material itself and which are formed in the basic plastic, especially polyethylene terephthalate (PET), during the production of the preform in an injection moulding machine, such a deleterious reagent being especially acetaldehyde. This gaseous compound is not toxic, but it can give rise, however, to a sweet taste in a liquid product, since it is readily soluble in water at room temperature. Thanks to this measure consisting in use of said additives as chemical blockers, the migration of acetaldehyde from the wall of the preform into the product accommodated therein is prevented, so that the taste of said product is not altered by it. It could be established that these chemical blockers can be best incorporated in the wall of the preform by using a liquid barrier layer according to the invention.

In further particularly remarkable application, cobalt is incorporated, which has the property of being a particularly good oxygen getter, but it is highly toxic, so that this element cannot be presently used in the existing technology, at least not in containers used for drinks. However, this becomes possible indeed when a liquid barrier is employed according to the present invention.

In a preferred embodiment of the preform according to the invention, said secondary layer is a passive barrier and is at least less permeable, preferably completely impermeable to substances that might possibly migrate to it, such as oxygen, carbon dioxide, etc. Thanks to the presence of such a barrier layer, said potentially migrating substances are arrested, so they cannot penetrate through the wall of the container. The excluding action of the barrier layer operates in both directions, in that it prevents the inward penetration of undesirable substances, such as e.g. oxygen, into the container when the latter contains products that can be oxidized, decomposed or spoilt, or a product that can suffer a quality reduction, under the influence of such gaseous substances.

There is another way whereby the barrier layer prevents the migration of any potentially desirable gaseous components from the product present in the container through the walls of the latter to the outside, as in the case of drinks enriched with extra carbon dioxide, such as soft drinks and beer.

The migration of particles is advantageously prevented in both directions, i.e. both from the interior to the outside and from the surroundings to the inside of the container.

In a further additional embodiment of the preform according to the invention, the secondary material has a chemical affinity for said undesirable substances to such an extent that it reacts with them and so "locks" them in the container wall itself, thus preventing them from escaping or penetrating into the interior of the container.

In a specific embodiment of the preform according to the invention, said secondary layer further contains additives that have the same function as those stopping the migration, excluding undesirable gas components and screening out radiation.

The present invention also relates to a process for the production of a preform or container as specified in the corresponding process claims and as described below in further detail.

In the process according to the invention, a fluid is thus introduced as a secondary barrier layer directly through the injection point or sprue, while the conventional screw in the heating block only serves to inject the primary and tertiary layers.

In a preferred embodiment of the process according to the invention, the secondary material is fed in cold, directly through the sprue.

The present invention also relates to a device for the production of a preform or container as specified in the corresponding device claims and as described below in further detail for the execution of the methods claimed therefor.

Further particularities and characteristics of the invention are specified in the further sub-claims.

### Brief description of the drawings

Further details are illustrated in the following examples with reference to the attached drawings, which are described below.
Fig.1 to 3 are each a diagrammatic representation of a cross section in a central plane of respective embodiments of a preform according to the invention ;
Fig. 4 is a diagrammatic representation of a partial cross section through the axis of a first embodiment of a preform according to the invention ;
Fig. 5 is a similar representation of a variant of the preform according to the preceding figure ;
Fig. 6 is a similar representation of a second embodiment of a preform according to the invention ;
Fig. 7 to 9 are each a detailed view of a part of the preform represented in Fig. 1 to 3 respectively according to the invention ;
Fig. 10 to 13 are each a diagrammatic representation of the functional working of an essential part of the preform, resp. container according to the invention ;
Fig. 14 and 15 are a mixed representation of a container according to the invention, partially in a front view and partially in a cross section, with an enlarged view of a detail of the wall thereof ;
Fig. 16 is a diagrammatic representation of a first embodiment of a manufacturing device of the preform according to the invention ;
Fig. 17 is a diagrammatic representation of a second embodiment of a manufacturing device of the preform according to the invention ;
Fig. 18 is a more detailed representation in cross section of an essential part of the device as represented on Fig. 16.

### Description

The invention generally relates to a plastic container, or to a preform for making it, including the so-called barrier technique, using a multilayer structure that comprises a barrier layer.

This multi-layer structure is shown in the drawings in the case of a preferred use of the preform as a semi-finished product in the blow-moulding of preforms for making containers. It relates essentially to containers for packaging and storing drinks, food products, cosmetics, etc. in the liquid, solid or even gaseous state, such as e.g. bottles, jars, goblets, beakers, tins, jerry cans and the line.

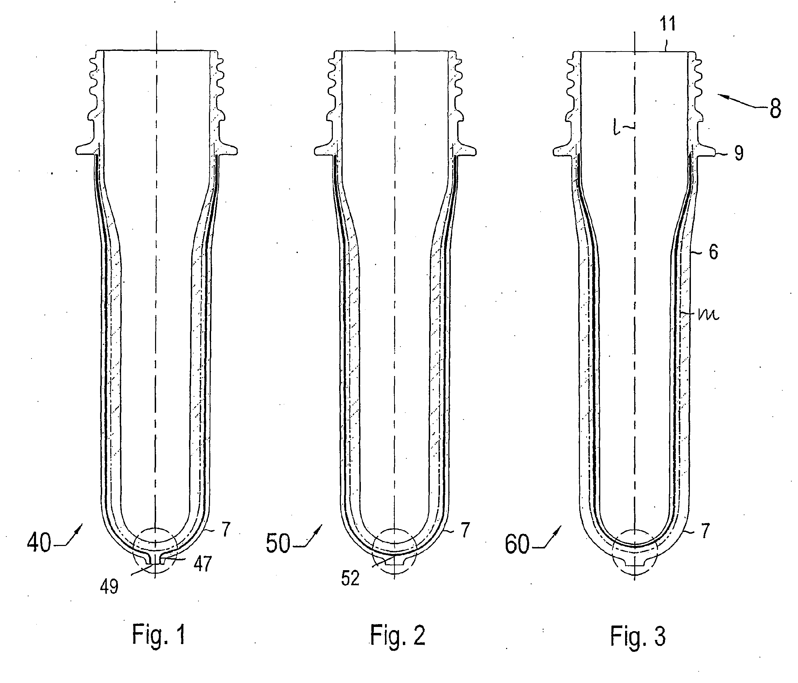

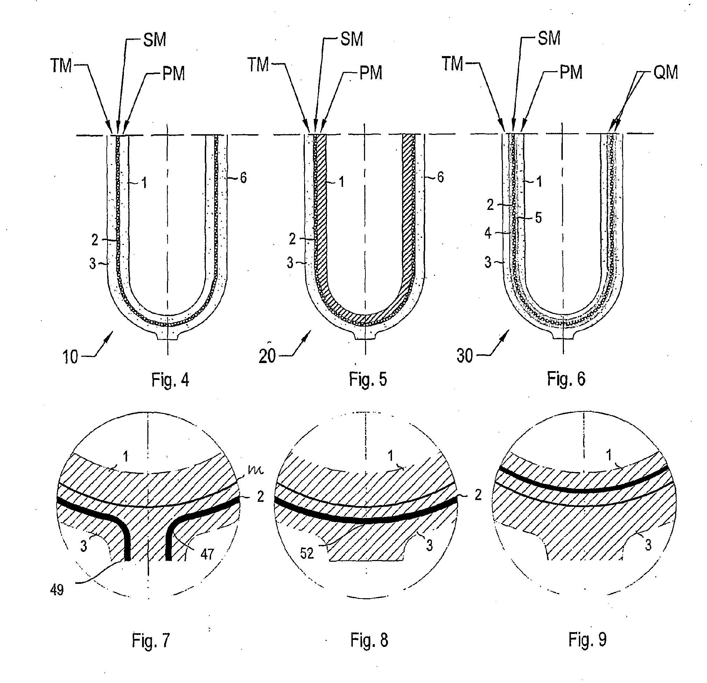

Fig.1 shows a container in its semi-finished form as a preform 40 that essentially has a neck region 8 forming a pouring spout, a proper wall section 6 that is to be blown up in order to form the container, and a bottom section 7 forming the base. The neck region 8 of the preform surrounds a pouring opening 11 out the product at one end and leads to said wall section 6 of the preform at a neck ring 9. At the bottom 7, said secondary layer has a bent 47 towards the base and extends further out, beyond its free end 49. This is shown in greater detail in fig. 7.

This last embodiment is particularly useful when said barrier layer 2 is rather directed to the outside of the preform wall 6. This is the best embodiment for laminate applications typical of liquid barriers.

Fig. 2 shows a further variant of the preform 50, in the case of which the core layer 2 is interrupted 52 in the base area 7.

A further variant is shown in fig. 4, wherein the core layer 2 continues in the base area 7 of the preform 60, with the longitudinal axis 2, and the core layer 2 is directed to the inside of the preform with respect to the central line m, as shown in the fig.

Fig. 4 shows the multilayer structure 1, 2, 3 of a preform 10. The base 7 of the preform has an injection point 47, where the primary material PM and the tertiary material TM can be injected into an injection mould provided for this purpose but not shown in the drawings, and where the secondary material SM can be carried therewith.

The layer 1 facing the inside of the preform is made of said primary material, while the layer 3 facing the outside of the preform is made of said tertiary material, both of which are made of the same material consisting of plastic.

A secondary layer 2 is present between the primary 1 and tertiary 3 layer, which is made of said secondary material so that said secondary layer forms an intermediate layer. Said secondary layer constitutes a barrier layer in the sense described above.

Fig. 5 shows a variant, wherein the preform 20 with a fluid barrier consists of three layers, in which the primary and tertiary layers 1, 3 are made of two different plastics.

This barrier layer 2 can form both an active and a passive barrier, in the meaning that in the case of a passive barrier, the secondary material is impermeable or less permeable to certain substances, such as oxygen and carbon dioxide, and therefore arrests their migration. In the case of an active barrier, on the other hand, the secondary material reacts with a certain substance and thus "locks" harmful and/or undesirable substances in the wall, i.e. by chemically binding with them, so that they cannot escape or penetrate inwards.

The barrier layer forms at most 5% and preferably no more than 1% of the total weight of the preform, depending on the application in question.

In one example, the barrier layer consists of oil or water, or preferably of liquids with an oil or water base.

In another example, the secondary layer consists of a polymer-bioaggregate (PBA), where the yeast strains and yeast cells can tolerate a higher temperature of up to about 170°C if the period of exposure is relatively short.

Coatings, such as polyurethane coatings for example, have the advantage that they can be used at higher temperatures as well.

Said primary and tertiary plastics are advantageously made of polyethylene terephthalate (PET). They can also be made of polypropylene, polycarbonate or other polymers.

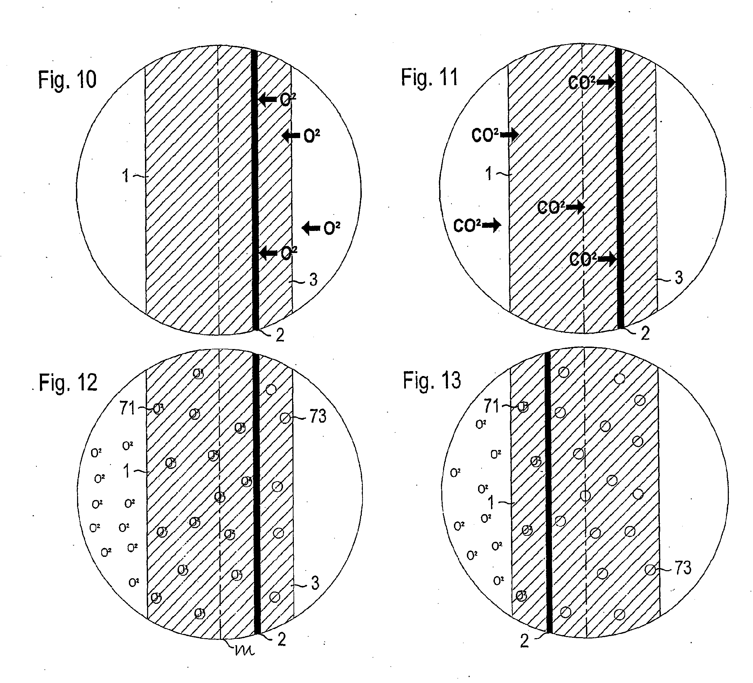

The primary and the tertiary material can also consist of plastics that contain additives 71, 73 as represented in fig. 12 and 13. Vitamins is an example of such additives used.

Furthermore, such preforms can be fully recycled. The primary material can also possibly be made of a mixture of a recycled material and additives.

More particularly, said primary plastic can contain additives 71 as shown in fig. 12 that bind any undesirable oxygen that migrates into the container from outside, thus preventing it from reaching the product present in the container.

This additive can also ensure that the oxygen present in the container together with the drink, especially in the ullage space above the filling level of the drink is bound, so that it cannot cause any oxidation either.

A further additive consists of colouring agents, making the barrier layer into a light barrier. Ultraviolet rays can be kept out of the container, which is useful, because light causes the most degradation in milk and especially in the vitamins contained in it.

Another additive is a substance that binds acetaldehyde (AA). AA is a substance formed from polyethylene terephthalate during the production of the preform in an injection moulding machine. If acetaldehyde migrates out of the wall of the bottle into the product contained in it, it can cause a change of the taste of the drink, especially if this is carbonated water. Carbon dioxide is a very unstable gas, which readily combines with other substances. It produces a sweet taste, which creates an unpleasant impression in the drink, especially in the case of water, so it should be prevented.

The above description illustrates the influence of a suitable position of the secondary layer 2 in the preform. The fact is that, if the secondary layer faces the outside of the preform as shown in fig. 1 and 2, the polyethylene terephthalate layer, containing the additives, is thicker. If additives 71 are present in the primary polyethylene terephthalate layer 1, this allows more functional components to be in contact with the product. More oxygen coming from the preform can thus be bound, as shown in fig.12 and 13.

The secondary material SM is intended for forming a barrier layer e.g. to stop oxygen from migrating through the preform wall. The inward penetration of oxygen in the preform must be prevented if the container is accommodating products that are oxidized, decomposed, spoilt or reduced in quality by oxygen, examples of such products being milk and fruit juices, as shown in fig. 10.

This oxygen-excluding barrier layer is also important when the container accommodates water to which extra oxygen has been added. In this case, this layer prevents oxygen from traversing the walls outwards, then resulting in a loss of the quality of the water.

The barrier layer as shown in fig. 11 is used for preventing the outward migration of carbon dioxide through the wall of the preform. The loss of carbon dioxide from the container must be prevented whenever the latter contains a soft drink or beer, for example, since such a loss reduces the quality of the product.

A gas barrier can still further have the same function of stopping the migration of oxygen and carbon dioxide, as well as excluding UV radiation.

A further variant of preform 30 is partially shown in fig. 6. The preform has five layers. The secondary layer 2 carries on each side an intermediate layer 4, 5 made of a quaternary material QM consisting of a fluid. Said fluid is advantageously formed by an adhesive used to prevent delamination between the primary, secondary and tertiary layer of the preform.

In a particularly advantageous variant, each adhesive layer 4, 5 is treated with yeast cells.

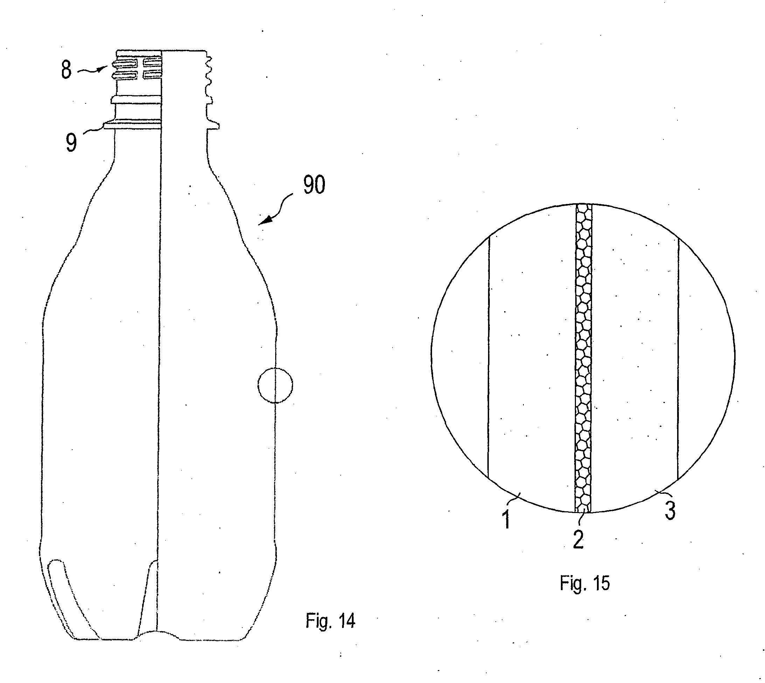

A container as such is presented in its finished form in fig. 14, a detail of which shows the wall in fig. 15, showing a wall of the type represented in fig. 4 by way of example.

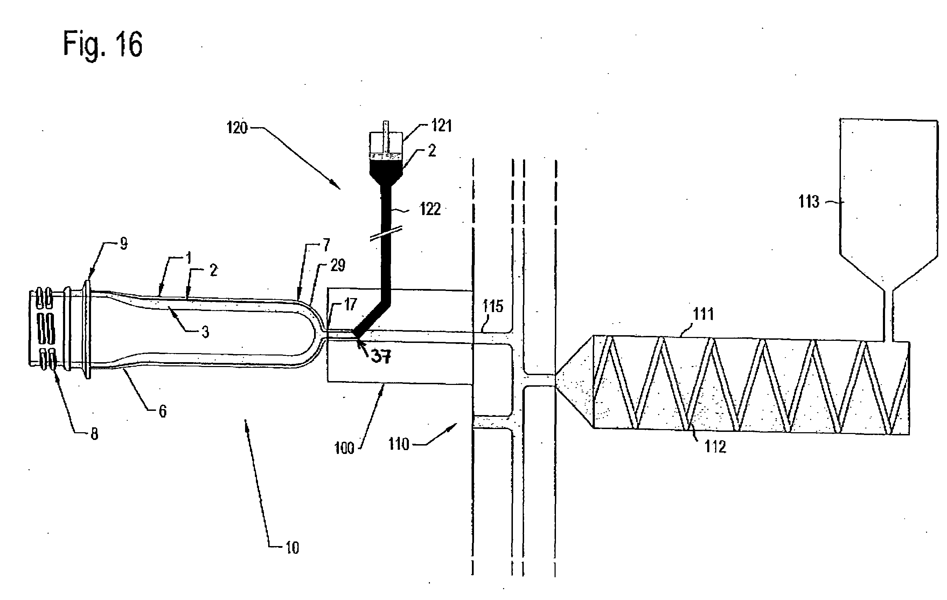

Fig. 16 shows a device for making the preform described above, where the primary plastic and, if need be, the tertiary plastic are fed in conventionally by means of a primary feeding unit 110, more specifically an injection moulding equipment at a certain temperature T and pressure p.

The temperature T in this part 110 of the device is relatively high, being typically about 240°C, so that the primary plastic PM and, if need be, the tertiary plastic TM, introduced by the conventional injection method, are heated to a higher temperature than their melting point at atmospheric pressure. In the conventional device, the primary feeding unit 110 mentioned above is mounted at a certain distance from the base area 7 of the injection mould (not shown) that is used for making the preform, this distance being measured along its axis 2. The material is thus transferred from the processing unit 111 to the injection mould at an elevated temperature, this being called "warm inlet", said processing unit comprising a screw 112 used in the well-known production process, as described e.g. in EP-A-0686081, which screw is supplied with the primary plastic and, if need be, with the tertiary plastic from a reservoir 113, using a system of feed channels 114. The required basic material for a specific preform is supplied from the corresponding feed channel 115 that is specifically intended for use when making one preform 10.

Independently of the warm inlet mentioned above, a fluid is introduced in the featured way at a relatively lower temperature, typically at about room temperature, while a higher temperature T prevails on the primary side. For this purpose, the secondary material is introduced through a feed channel 122 that connects a fluid reservoir 121 with the sprue 17 of the injection mould mentioned above. This fluid reservoir 121 is kept at room temperature and at atmospheric pressure.

In a variant as shown in fig. 16, the secondary material can be fed in under pressure as well, e.g. by means of a pump 127 or an injection moulding system but without using a screw. If need be, the secondary feed temperature can be higher than said room temperature but significantly lower than the primary temperature T prevailing on the primary side.

The secondary feeding unit 120 is arranged outside said primary feeding unit 110. Owing to this mutually separate arrangement, it is possible to ensure different working temperatures for both primary 113 and secondary reservoirs 121, on the one hand, but it also becomes possible to use a secondary feeding unit 120 that has a considerably simpler structure, on the other hand.

Thanks to said "cold inlet" by means of said secondary feeding unit 120, it is possible to use fluids of a special type, containing said polymer-bioaggregates (PBAs), which substances are particularly sensitive to the temperature. Such PBAs cannot withstand the temperatures needed for processing in the basic feed device 110, indeed.

A preform 10 consisting of three layers as shown in fig. 4 and 5 is achieved with said split feeding units 110, 120. It should be mentioned here that the secondary feeding unit 120 is arranged outside the primary feeding unit 110 in order to make it possible to use different processing temperatures, as described above.

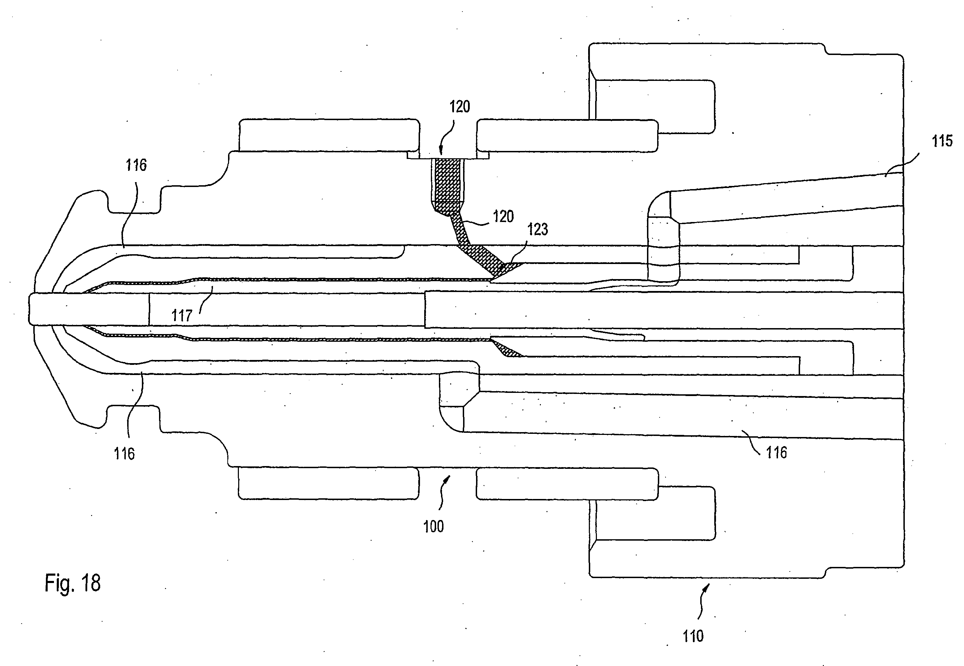

In an embodiment of the production process of said preform 10, the primary layer 1 is formed by feeding the primary plastic through the corresponding feed channels 114, while the secondary layer 2 is formed by feeding the corresponding secondary material through a separate feed channel 122 provided for it. If required, the secondary material is introduced through an inlet dye 123 provided for it, shown on fig. 18. This fig, shows a detailed representation of a mixing block indicated schematically with 100 in fig. 16. The way the secondary material is applied over a relatively short distance d from the sprue 17 upstream of the preform mould is shown schematically therein. The secondary fluid material is advantageously introduced over the primary material in a peripheral manner, using an annular feed element 123. In this method, the secondary material is conveyed jointly with the primary material under the influence of the lamination effect, which is typical of liquids. Especially in the case of said biological applications, particularly said Polymer-bioaggregates (PBAs), the joint feed distance d for the primary and secondary material will be kept as short as possible, as a result whereof, the secondary material, which is held at a comparatively lower temperature, is exposed for the shortest possible time to the significantly hither temperature of the primary and tertiary materials originating from the heating block 110.

The connection 37 is arranged at a relatively short distance d from the sprue 17 with respect to the inlet of the primary feed channel 115 in the injection "nose" 100, so as to minimize the common distance and hence the time over which the secondary and primary materials come into contact with each other before reaching the mould. The heating effect exerted on the secondary material by the co-fiowing primary material can therefore be minimized, which is quite advantageous, because excessive heating-up is particularly undesirable in some cases, especially beyond a certain temperature, as in the case of said polymer-bioaggregates (PBAs).

The secondary material is thus fed in not through the heating feed block but outside it, directly through the injection "nose" 100 mentioned above.

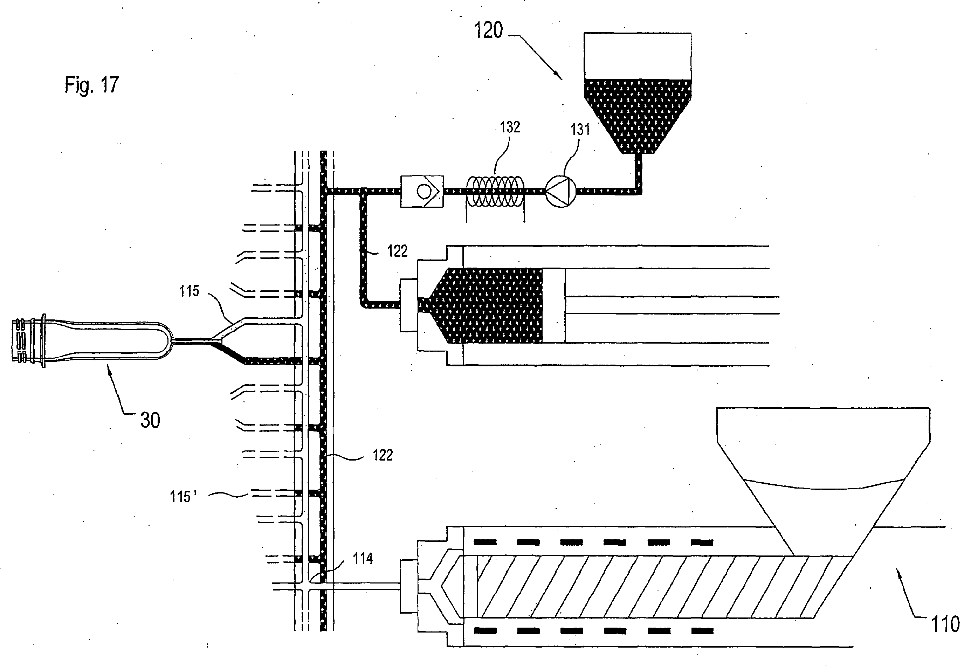

Fig. 17 shows a variant of the device for making a multilayer preform as shown in fig. 6. The primary and tertiary plastic layers are formed by introducing the primary material PM and the tertiary material TM at an elevated temperature from the primary feeding unit 110 through the feed channel system 114 provided for this purpose, with one such feed channel 115 being used for each preform 30 to be produced, as described above. The secondary layer is fed in through the secondary feeding unit 120, as described above, using the secondary feed channels 122 provided for this purpose, which are kept under pressure by means of a pumping system 131 and are subjected to the action of heating elements, such as electrical resistances 132, for example, as a result whereof, the viscosity of the fluid introduced can be modified by heating. For example, this viscosity can be considerably reduced, as with adhesives for example, intended especially for forming an intermediate adhesive layer 4, 5 to counteract delamination.

The quaternary polymer QM can be e.g. a polyolefin, such as polyethylene or polypropylene, polyethylene terephthalate, polyesters, and other polymers.

## Claims

1. Preform for producing containers (90), comprising a neck section (8), an adjoining wall section (6) and a bottom section (7) forming the base of the preform, said preform comprising a primary layer (1) directed inwardly respective the preform and composed of a primary synthetic material (PM), a tertiary layer (3) at a certain distance of said primary layer (1) which is directed outwardly with respect thereto, thereby forming its outer surface layer (3) composed of a tertiary synthetic material (TM), and a secondary layer (2) between said primary and tertiary layers (1,3) **characterised in that** said layers constitute a multilayer structure, said secondary layer being arranged as an intermediate layer composed of a secondary material (SM) consisting of a fluid which is liquid, and **in that** said secondary layer (2) is a barrier layer, which constitutes less than 5%, preferably at most 1% of the total weight, thereby enabling said secondary material to be evenly applied with very low quantities of said secondary material (SM).

2. Preform according to the preceding claim, **characterised in that** said secondary layer (2) has a very small thickness, preferably not exceeding 0,05 mm, preferably even less than 0,01 mm.

3. Preform according to one of the preceding claims, **characterised in that** said liquid consists of an oil-based liquid.

4. Preform according to one of the preceding claims, **characterised in that** said liquid consists of a water containing, respectively water-bound liquid.

5. Preform according to one of the preceding claims, **characterised in that** said liquid consists of an acrylate, possibly on oil or water basis.

6. Preform according to one of the preceding claims, **characterised in that** at least one additional intermediate layer (4, 5), which is composed of a quaternary material (QM), is provided at at least one contact surface of said secondary layer (2) with respect to the primary, respectively tertiary adjacent layer (1, 3),

7. Preform according to one of the preceding claims, **characterised in that** said secondary layer (2) consists in a so-called intermediate phase, such as pastes, adhesives, and other substances having a liquid phase under normal conditions of pressure and temperature, which may possibly be converted into a solid phase, in particular by hardening.

8. Preform according to one of the preceding claims, **characterised in that** at least one of said materials or layers (1, 2, 3, 4, 5) contains a predetermined quantity of additives (71, 73).

9. Preform according to the preceding claim, **characterised in that** said additives consist of dying substances.

10. Preform according to one of both preceding claims, **characterised in that** said additives have a neutralising action on external radiations and/or substances.

11. Preform according to one of claims 8 to 10, **characterised in that** said additives have a neutralising action on reagents which have an adverse effect on a product to be contained.

12. Preform according to one of claims 8 to 11, **characterised in that** said additives (71) have a neutralising action on undesired gas formation originating from the degradation of said product.

13. Preform according to one of claims 8 to 12, **characterised in that** said additives have a neutralising action on waste or degradation materials originating from the preform itself.

14. Preform according to one of the preceding claims, **characterised in that** said primary and tertiary materials (PM, TM) are mutually different.

15. Preform according to one of the preceding claims, **characterised in that** said secondary, possibly quaternary materials (SM, QM) are composed of so-called polymer bio-aggregate which are composed by cells and/or cell products which are worked in a polymer.

16. Preform according to the preceding claim, **characterised in that** said cells are composed of so-called cysts and/or belong to the phase of the inactive or sleeping stages.

17. Preform according to claim 15, **characterised in that** said cells are composed of so-called yiests.

18. Preform according to one of the claims 15 to 17, **characterised in that** said cells consist in prokaryotes, in particular bacteria's, and/or eukaryotes.

19. Preform according to the preceding claim, **characterised in that** the cells are composed of eukaryotes of the type protests, fungi, plants and/or animals.

20. Preform according to one of the claims 15 to 19, **characterised in that** said cell products are composed of so-called metabolites, i.e. the molecules which are bio-chemically synthesised by organisms.

21. Preform according to one of the claims 15 to 20, **characterised in that** said organisms are unicellular.

22. Preform according to one of the claims 15 to 20, **characterised in that** said organisms are multicellular.

23. Container **characterised in that** it consists of an injection piece obtained from blowing a preform as defined in one of the preceding claims.

24. Method for producing a preform in an injection moulding mould according to one of the claims 1 to 22, wherein a predetermined quantity of a primary, respectively tertiary synthetic material (PM, TM) is injected in a hollow mould space under a relatively high pressure p and temperature T, **characterised in that** a predetermined quantity of a secondary material (SM) is further fed in the hollow mould space under conditions of pressure and/or temperature which are substantially lower than said primary and tertiary injection pressure p, resp. temperature T, wherein said conditions of temperature for the feeding of secondary material (SM) are substantially at room temperature.

25. Method according to the preceding claim, **characterised in that** said secondary material (SM) is fed under normal conditions of atmospheric pressure and room temperature.

26. Method according to one of claims 24 to 25, **characterised in that** said secondary material (SM) is fed in a peripheral way on said primary material (PM) during the injection phase thereof and which is conveyed by the latter to said moulding space over a certain distance which is kept relatively small.

27. Method according to one of the claims 24 to 26, **characterised in that** predetermined quantity of additives is fed previously to one of said materials with a neutralising action on undesired effects.

28. Method according to one of the claims 24 to 27, **characterised in that** work is carried out at the working temperature range taken from the temperature interval of which the lower limit is set at substantially 100°C under substantially standard pressure conditions, in particular at substantially one atmosphere.

29. Method according to one of the claims 24 to 28, **characterised in that** a liquid is fed cold as a secondary material under normal conditions of atmospheric pressure and room temperature.

30. Method according to one of the claims 24 to 29, wherein the preform is replaced by a container (90).

31. Device for producing a preform as defined in one of the claims 1 to 22, **characterised in that** there is provided a secondary feeding unit (120), which is independent from a hot primary feeding unit (110) and which is arranged outwardly respective said primary feeding unit (110), through which secondary material (SM) can be fed from an independent fluid reservoir (120) through a feed channel (122) provided therefor.

32. Device according to the preceding claim, **characterised in that** the secondary feed channel (122) is connected to the primary feed channel (115) in a common injection nose (100) which extends directly on a moulding mould for producing the preform (10), respectively container, in the sprue (17) thereof.

33. Device according to one of both preceding claims, **characterised in that** a connecting point (37) consisting of an annular element (123) enables a peripheral feed of the secondary material (SM) on the primary material (PM).

34. Device according to the preceding claim, **characterised in that** said connection (37) is provided with the sprue (17) at a relatively small distance respective the inlet of the primary feed channel (115) in said injection nose (100).

35. Device according to one of the claims 31 to 34, **characterised in that** there is provided a pressure unit (131) at the secondary feed channel (122) enabling the achievement of a pressure p₀ at the secondary side for the inlet of secondary material (SM) under a determined pressure p₀ which is preferably lower than the pressure p prevailing at the primary feed channel (114).

36. Device according to one of the claims 31 to 35, **characterised in that** there are provided heating elements (132) at the secondary feed channel (122) enabling a temperature T₀ to be achieved at the secondary side for the feed of secondary material (SM) under a determined temperature T₀ which is preferably lower than the temperature prevailing at the primary feed channel (114).

## Patentansprüche

1. Vorform zur Herstellung von Behältern (90) umfassend einen Halsabschnitt (8), einen anschließenden Wandabschnitt (6) und einen Bodenabschnitt (7), der den Boden der Vorform bildet, wobei die Vorform eine primäre Schicht (1), die in Bezug auf die Vorform nach Innen gerichtet ist und von einem primären synthetischen Material (PM) gebildet wird, eine tertiäre Schicht (3) in einem bestimmten Abstand zu der primären Schicht (PM), die in Bezug dazu nach außen gerichtet ist und **dadurch** deren äußere Oberflächenschicht (3) bildet, die aus einem tertiären, synthetischen Material (TM) gebildet wird, und eine sekundäre Schicht (2) zwischen der primären und tertiären Schicht (1, 3) aufweist, **dadurch gekennzeichnet, dass** die Schichten eine Multischicht-Struktur bilden, wobei die sekundäre Schicht (2) als eine Zwischenschicht angeordnet ist, die von einem sekundären Material (SM) gebildet wird, das aus einem flüssigen Fluid besteht, und dass die sekundäre Schicht (2) eine Sperrschicht ist, die weniger als 5%, vorzugsweise maximal 1 % des Gesamtgewichts darstellt, wodurch dem sekundären Material ermöglicht wird, in sehr geringen Mengen des sekundären Materials (SM) gleichmäßig aufgebracht zu werden.

2. Vorform nach dem vorhergehenden Anspruch, **dadurch gekennzeichnet, dass** die sekundäre Schicht (2) eine sehr geringe Dicke aufweist, vorzugsweise nicht mehr als 0,05 mm, vorzugsweise sogar weniger als 0,01 mm.

3. Vorform nach einem der vorhergehenden Ansprüche, **dadurch gekennzeichnet, dass** die Flüssigkeit aus einer auf Öl basierenden Flüssigkeit besteht.

4. Vorform nach einem der vorhergehenden Ansprüche, **dadurch gekennzeichnet, dass** die Flüssigkeit aus einer Wasser enthaltenden, beziehungsweise wassergebundenen Flüssigkeit besteht.

5. Vorform nach einem der vorhergehenden Ansprüche, **dadurch gekennzeichnet, dass** die Flüssigkeit aus einem Acrylat, möglichst auf Öl- oder Wasserbasis, besteht.

6. Vorform nach einem der vorhergehenden Ansprüche, **dadurch gekennzeichnet, dass** wenigstens eine zusätzliche Zwischenschicht (4, 5), die aus einem quartären Material (QM) besteht, an wenigstens einer Kontaktfläche der sekundären Schicht (2) in Bezug auf die primäre, beziehungsweise tertiäre benachbarte Schicht (1, 3) bereit gestellt ist.

7. Vorform nach einem der vorhergehenden Ansprüche, **dadurch gekennzeichnet, dass** die sekundäre Schicht (2) aus einer so genannten Zwischenphase besteht, wie Pasten, Klebstoffe und anderen Substanzen mit einer flüssigen Phase unter normalen Druck- und Temperaturbedingungen, die möglicherweise in eine feste Phase umgewandelt werden kann, insbesondere durch Aushärten.

8. Vorform nach einem der vorhergehenden Ansprüche, **dadurch gekennzeichnet, dass** wenigstens eines der Materialien oder Schichten (1, 2, 3, 4, 5) eine vorgegebene Menge von Additiven (71, 73) enthält.

9. Vorform nach einem der vorhergehenden Ansprüche, **dadurch gekennzeichnet, dass** die Additive aus färbenden Substanzen bestehen.

10. Vorform nach einem der vorhergehenden Ansprüche, **dadurch gekennzeichnet, dass** die Additive eine neutralisierende Einwirkung auf externe Einstrahlungen und/oder Substanzen aufweisen.

11. Vorform nach einem der Ansprüche 8 bis 10, **dadurch gekennzeichnet, dass** die Additive eine neutralisierende Einwirkung auf Reagenzien aufweisen, die eine nachteilige Wirkung auf ein zu enthaltendes Produkt besitzen.

12. Vorform nach einem der Ansprüche 8 bis 11, **dadurch gekennzeichnet, dass** die Additive (71) eine neutralisierende Einwirkung auf ungewünschte Gasbildung aufweisen, die von der Degradation des Produkts herrührt.

13. Vorform nach einem der Ansprüche 8 bis 12, **dadurch gekennzeichnet, dass** die Additive eine neutralisierende Einwirkung auf Abfall- oder Degradationsprodukte aufweisen, die von der Vorform selbst herrührt.

14. Vorform nach einem der vorhergehenden Ansprüche, **dadurch gekennzeichnet, dass** das primäre und tertiäre Material (PM, TM) gegenseitig unterschiedlich sind.

15. Vorform nach einem der vorhergehenden Ansprüche, **dadurch gekennzeichnet, dass** das sekundäre und möglicherweise quartäre Material (SM, QM) aus so genanntem Bio-Aggregat Polymer bestehen, die aus Zellen und/oder Zellprodukten bestehen, die in einem Polymer verarbeitet sind.

16. Vorform nach einem der vorhergehenden Ansprüche, **dadurch gekennzeichnet, dass** die Zellen aus so genannten Zysten bestehen und/oder zur Phase der inaktiven oder schlafenden Stufen gehören.

17. Vorform nach Anspruch 15, **dadurch gekennzeichnet, dass** die Zellen aus so genannten Hefen bestehen.

18. Vorform nach einem der Ansprüche 15 bis 17, **dadurch gekennzeichnet, dass** die Zellen aus Prokaryoten, insbesondere Bakterien, und/oder Eukaryoten bestehen.

19. Vorform nach einem der vorhergehenden Ansprüche, **dadurch gekennzeichnet, dass** die Zellen aus Eukaryoten aus dem Reich der Protisten, Pilze, Pflanzen und/oder Tiere bestehen.

20. Vorform nach einem der Ansprüche 15 bis 19, **dadurch gekennzeichnet, dass** die Zellprodukte aus so genannten Metaboliten bestehen, d.h. die Moleküle, die von Organismen bio-chemisch synthetisiert sind.

21. Vorform nach einem der Ansprüche 15 bis 20, **dadurch gekennzeichnet, dass** die Organismen einzellig sind.

22. Vorform nach einem der Ansprüche 15 bis 20, **dadurch gekennzeichnet, dass** die Organismen mehrzellig sind.

23. Behälter, **dadurch gekennzeichnet, dass** er aus einem Spritzgussteil besteht, das vom Ausblasen einer Vorform erzielt wird, wie sie in einem der vorhergehenden Ansprüche definiert wurde.

24. Verfahren zum Herstellen einer Vorform in einer Spritzgussform nach einem der Ansprüche 1 bis 22, wobei eine vorgegebene Menge eines primären beziehungsweise tertiären synthetischen Materials (PM, TM) in einen hohlen Gussformraum unter einem relativ hohen Druck p und Temperatur T eingespritzt wird, **dadurch gekennzeichnet, dass** eine vorgegebene Menge eines sekundären Materials (SM) weiter in den hohlen Gussformraum zugeführt wird unter Druck- und/oder Temperaturbedingungen, die im wesentlichen niedriger sind als der primäre und tertiäre Einspritzdruck p beziehungsweise -Temperatur T, wobei die Temperaturbedingungen für das Zuführen von sekundärem Material (SM) im wesentlichen bei Raumtemperatur liegen.

25. Verfahren nach dem vorhergehenden Anspruch, **dadurch gekennzeichnet, dass** das sekundäre Material (SM) unter normalen Bedingungen von atmosphärischem Druck und Raumtemperatur zugeführt wird.

26. Verfahren nach einem der Ansprüche 24 bis 25, **dadurch gekennzeichnet, dass** das sekundäre Material (SM) auf einem peripheren Weg auf das primäre Material (PM) während dessen Einspritzphase zugeführt wird von dem Letzteren zum Gussformraum über eine bestimmte Entfernung, die relativ klein gehalten wird, transportiert wird.

27. Verfahren nach einem der Ansprüche 24 bis 26, **dadurch gekennzeichnet, dass** vorgegebene Mengen von Additiven vorher zu einem der Materialien mit einer neutralisierenden Einwirkung bei ungewünschten Wirkungen zugeführt werden.

28. Verfahren nach einem der Ansprüche 24 bis 27, **dadurch gekennzeichnet, dass** die Arbeit im Arbeitstemperaturbereich ausgeführt wird, der im Temperaturintervall liegt, dessen untere Grenze bei im wesentlichen 100°C unter im wesentlichen Standard-Druckbedingungen, insbesondere bei im wesentlichen einer Atmosphäre, festgelegt ist.

29. Verfahren nach einem der Ansprüche 24 bis 28, **dadurch gekennzeichnet, dass** eine Flüssigkeit kalt als ein sekundäres Material unter normalen Bedingungen von atmosphärischem Druck und Raumtemperatur zugeführt wird.

30. Verfahren nach einem der Ansprüche 24 bis 29, wobei die Vorform durch einen Behälter (90) ersetzt wird.

31. Vorrichtung zur Herstellung einer Vorform, wie sie in einem der Ansprüche 1 bis 22 definiert wurde, **dadurch gekennzeichnet, dass** eine sekundäre Zuführeinheit (120), die unabhängig von einer heißen, primären Zuführeinheit (110) ist und die in Bezug auf die primäre Zuführeinheit (110) außen angeordnet ist, bereit gestellt ist, durch welche sekundäres Material (SM) von einem unabhängigen Fluidreservoir (120) durch einen dazu bereitgestellten Zuführkanal (122) zugeführt werden kann.

32. Vorrichtung nach dem vorhergehenden Anspruch, **dadurch gekennzeichnet, dass** der sekundäre Zuführkanal (122) mit dem primären Zuführkanal (115) in einer gemeinsamen Einspritznase (100) verbunden ist, die sich direkt an eine Gussform zur Herstellung der Vorform (10) beziehungsweise Behälter an dessen Angusskegel (17) erstreckt.

33. Vorrichtung nach einem der beiden vorhergehenden Ansprüche, **dadurch gekennzeichnet, dass** ein Verbindungspunkt (37), der aus einem ringförmigen Element (123) besteht, eine periphere Zuführung des sekundären Materials (SM) auf das primäre Material (PM) ermöglicht.

34. Vorrichtung nach dem vorhergehenden Anspruch, **dadurch gekennzeichnet, dass** die Verbindung (37) mit einem Anspritzkegel (17) in einem relativ kleinen Abstand in Bezug auf den Einlass des primären Zuführkanals (115) in die Einspritznase (100) versehen ist.

35. Vorrichtung nach einem der Ansprüche 31 bis 34, **dadurch gekennzeichnet, dass** eine Druckeinheit (131) am sekundären Zuführkanal (122) bereitgestellt ist, die das Erreichen eines Drucks p₀ an der sekundären Seite für den Einlass von sekundärem Material (SM) unter einem vorgegebenen Druck p₀ ermöglicht, der vorzugsweise niedriger ist als der Druck p, der am primären Zuführkanal (114) vorherrscht.

36. Vorrichtung nach einem der Ansprüche 31 bis 35, **dadurch gekennzeichnet, dass** Heizelemente (132) am sekundären Zuführkanal (122) bereitgestellt sind, die eine an der sekundären Seite für die Zuführung von sekundärem Material (SM) zu erzielende Temperatur T₀ unter einer vorgegebenen Temperatur T₀ ermöglicht, die vorzugsweise niedriger ist als die Temperatur, die am primären Zuführkanal (114) vorherrscht.

## Revendications

1. Préforme pour la production de récipients (90), comprenant une section de goulot (8), une section de paroi adjacente (6) et une section de fond (7) constituant la base de la préforme, ladite préforme comprenant une couche primaire (1) qui est agencée intérieurement par rapport à la préforme et qui est composée d'un matériau synthétique primaire (PM), une couche tertiaire (3) se trouvant à une certaine distance de ladite couche primaire (1), qui est tournée vers l'extérieur de la préforme, constituant ainsi la couche de surface extérieure (3) de celle-ci, qui est composée d'une matière synthétique tertiaire (TM), et une couche secondaire (2) située entre lesdites couches primaire et tertiaire (1, 3), **caractérisée en ce que** lesdites couches constituent une structure multicouche, ladite couche secondaire (2) étant agencée comme une couche intermédiaire composée d'un matériau secondaire (SM) consistant en un fluide qui est liquide, et **en ce que** ladite couche secondaire (2) est une barrière, qui constitue moins de 5 %, de préférence au plus 1 % du poids total, permettant ainsi à ladite matière secondaire d'être appliquée uniformément à très faibles quantités de ladite matière secondaire (SM).

2. Préforme suivant la revendication précédente, **caractérisée en ce que** ladite couche secondaire (2) possède une épaisseur très faible, de préférence ne dépassant pas 0,05 mm, de préférence même inférieure à 0,01 mm.

3. Préforme suivant l'une des revendications précédentes, **caractérisée en ce que** le liquide précité consiste en un liquide à base d'huile.

4. Préforme suivant l'une des revendications précédentes, **caractérisée en ce que** le liquide précité consiste en un liquide aquifère ou respectivement dont l'eau est un composant.

5. Préforme suivant l'une des revendications précédentes, **caractérisée en ce que** le liquide précité est un acrylate, le cas échéant à base d'huile ou d'eau.

6. Préforme suivant l'une des revendications précédentes, **caractérisée en ce que** au moins une couche intermédiaire supplémentaire (4, 5), qui est composée d'un matériau quaternaire (QM), est prévue à hauteur d'au moins une surface de contact de ladite couche secondaire (2) par rapport aux couches adjacentes primaire, respectivement tertiaire (1, 3).

7. Préforme suivant l'une des revendications précédentes, **caractérisée en ce que** ladite couche secondaire (2) consiste en une phase dite intermédiaire, telle que des pates, des colles, et d'autres substances ayant une phase liquide sous des conditions normales de pression et de température, qui peut être convertie, le cas échéant, en une phase solide, en particulier par durcissement.

8. Préforme suivant l'une des revendications précédentes, **caractérisée en ce que** au moins l'une desdites matières ou couches (1, 2, 3, 4, 5) contient une quantité prédéterminée d'additifs (71, 73).

9. Préforme suivant la revendication précédente, **caractérisée en ce que** les additifs précités consistent en substances colorantes.

10. Préforme suivant l'une des deux revendications précédentes, **caractérisée en ce que** les additifs précités ont une action neutralisante sur des radiations et/ou substances extérieures.

11. Préforme suivant l'une des revendications 8 à 10, **caractérisée en ce que** les additifs précités ont une action neutralisante sur des agents de réaction qui ont un effet neutralisant contraire sur un produit à contenir.

12. Préforme suivant l'une des revendications 8 à 11, **caractérisée en ce que** les additifs précités ont une action neutralisante sur la formation non désirée de gaz provenant de la dégradation dudit produit.

13. Préforme suivant l'une des revendications 8 à 12, **caractérisée en ce que** les additifs précités ont une action neutralisante sur les déchets ou des matériaux dégradés provenant de la préforme elle-même.

14. Préforme suivant l'une des revendications précédentes, **caractérisée en ce que** les matières primaire et tertiaire (PM, TM) sont mutuellement différentes.

15. Préforme suivant l'une des revendications précédentes, **caractérisée en ce que** lesdites matières secondaires éventuellement quaternaires (SM, QM) se composent d'un dénommé bio-agrégat de polymère qui est constitué de cellules et/ou de produits cellulaires qui sont travaillés dans un polymère.

16. Préforme suivant la revendication précédente, **caractérisée en ce que** les lesdites cellules se composent de dénommés et/ou appartiennent à la phase de stades inactifs ou dormants.

17. Préforme suivant l'une des revendications 15, **caractérisée en ce que** lesdites cellules sont constituées de dénommés levures.

18. Préforme suivant l'une des revendications 15 à 17, **caractérisée en ce que** lesdites cellules consistent en procaryotes, en particulier des bactéries, et/ou en eucaryotes.

19. Préforme suivant la revendication précédente, **caractérisée en ce que** les cellules sont constituées de d'eucaryotes du type champignon, plantes et/ou animaux.

20. Préforme suivant l'une des revendications 15 à 19, **caractérisée en ce que** lesdits produits cellulaires sont constitués de dénommés métabolites, consistant en molécules qui sont synthétisées biochimiquement par des organismes.

21. Préforme suivant l'une des revendications 15 à 20, **caractérisée en ce que** lesdits organismes sont unicellulaires.

22. Préforme suivant l'une des revendications 15 à 20, **caractérisée en ce que** lesdits organismes sont multicellulaires.

23. Récipient **caractérisé en ce qu'**il consiste en une pièce moulée par injection qui est obtenue par soufflage d'une préforme telle que définie dans l'une des revendications précédentes.

24. Procédé de fabrication d'une préforme dans un moule à moulage par injection suivant l'une des revendications 1 à 22, dans lequel une quantité prédéterminée de matières plastiques primaire, respectivement tertiaire (PM, TM) est injectée dans un espace de moulage creux sous une pression p et température T relativement élevées, **caractérisé en ce qu'**une quantité prédéterminée de matière secondaire (SM) est également amenée dans l'espace de moule creux sous des conditions de pression et/ou de température qui sont sensiblement inférieures à celles de la pression p, respectivement température T d'injection précitées primaires et tertiaires, les conditions de température pour l'amenée de matière secondaire (SM) étant sensiblement à température ambiante.

25. Procédé suivant la revendication précédente, **caractérisée en ce que** ladite matière secondaire (SM) est amenée sous conditions normales de pression atmosphérique et température ambiante.

26. Procédé suivant l'une des revendications 24 ou 25, **caractérisée en ce que** ladite matière secondaire (SM) est amenée de façon périphérique sur ladite matière primaire (PM) pendant sa phase d'injection et qui est transportée par cette dernière pendant sa phase d'injection vers l'espace de moulage précitée sur une certaine distance qui est maintenue relativement faible.

27. Procédé suivant l'une des revendications 24 à 26, **caractérisé en ce qu'**une quantité prédéterminée d'additifs est amenée préalablement à l'une desdites matières avec une action neutralisante sur des effets non désirés.

28. Procédé suivant l'une des revendications 24 à 27, **caractérisée en ce qu'**il est mis en oeuvre à la plage de température de travail prise de l'intervalle de température, dont la limite inférieure est établie à sensiblement 100°C sous des conditions de pression sensiblement normales, en particulier à sensiblement une atmosphère.

29. Procédé suivant l'une des revendications 24 à 28, **caractérisé en ce qu'**un liquide est amené à froid, comme matériau secondaire sous des conditions normales de pression atmosphérique et de température ambiante.

30. Procédé suivant l'une des revendications 24 à 29, dans lequel la préforme est remplacée par un récipient (90).

31. Dispositif de production d'une préforme telle que définie dans l'une des revendications 1 à 22, **caractérisé en ce qu'**il est prévu une unité d'alimentation secondaire (120), qui est indépendante d'une unité d'alimentation primaire à chaud (110) et qui est agencée extérieurement à ladite unité d'alimentation primaire (110), par laquelle (120) de la matière secondaire (SM) peut être alimentée à partir d'un réservoir de fluide indépendant (120) par un canal d'alimentation (122) prévu à cette fin.

32. Dispositif suivant la revendication précédente, **caractérisé en ce que** le canal d'alimentation secondaire (122) est relié au canal d'alimentation primaire (115) en un nez d'injection commun (100) qui s'étend directement sur un moule de moulage pour la fabrication de la préforme (10), respectivement du récipient, dans le point d'injection (17) de celui-ci.

33. Dispositif suivant des deux revendications précédentes, **caractérisé en ce qu'**un point de connexion (37) consistant en un élément annulaire (123) permet une alimentation périphérique de la matière secondaire (SM) sur la matière primaire (PM)

34. Dispositif suivant la revendication précédente, **caractérisé en ce que** ladite connexion (37) est munie d'un point d'injection (17) situé à une distance relativement faible de l'entrée du canal d'alimentation primaire (115) dans le nez d'injection (100) précité.

35. Dispositif suivant l'une des revendications 31 à 34, **caractérisé en ce que** II est prévu une unité de pression (131) à hauteur du canal d'alimentation secondaire (122) permettant d'obtenir une pression p₀ du côté secondaire pour l'entrée de matière secondaire (SM) sous une pression déterminée p₀ qui est de préférence inférieure à la pression p prévalant à hauteur du canal d'alimentation primaire (114).

36. Dispositif suivant l'une des revendications 31 à 35, **caractérisé en ce qu'**il est prévu des éléments de chauffage (132) à hauteur du canal d'alimentation secondaire (122) permettant d'obtenir une température T₀ du côté secondaire pour l'entrée de matière secondaire (SM) sous une température déterminée T₀ qui est de préférence inférieure à la température prévalant à hauteur du canal d'alimentation primaire (114).
